# EUROPÄISCHE PATENTSCHRIFT

(11) **EP 1 176 362 B1**
(45) Veröffentlichungstag und Bekanntmachung des Hinweises auf die Patenterteilung: **01.12.2004**
(21) Anmeldenummer: 01123199.0
(22) Anmeldetag: 01.12.2000
(51) Int. Cl.: F21V 8/00

(54) **Anordnung von lichtabstrahlenden plattenförmigen Elementen**
Flat light-emitting elements system
Système à éléments luminescents plats

(30) Priorität: 09.12.1999 DE 29921689 U; 07.08.2000 DE 10039095
(43) Veröffentlichungstag der Anmeldung: 30.01.2002
(62) Teilanmeldung aus: 00126262.5
(73) Patentinhaber: Emde, Thomas, 60389 Frankfurt/Main (DE); Pohl, Heinrich Robert, 50769 Köln (DE)
(72) Erfinder: Emde, Thomas, 60389 Frankfurt/Main (DE); Pohl, Heinrich Robert, 50769 Köln (DE)
(74) Vertreter: Fritz, Edmund Lothar, Dipl.-Chem.

(56) Entgegenhaltungen:
- DE-A- 19 755 658
- GB-A- 2 241 056
- US-A- 5 921 652

## Beschreibung

Die vorliegende Erfindung betrifft eine Anordnung von lichtabstrahlenden plattenförmigen Elementen, bei der wenigstens einem plattenförmigen Element wenigstens ein Leuchtmittel zugeordnet ist, welches von der Stirnseite her Licht in das plattenförmige Element hinein abstrahlt und dieses Licht als Streulicht über die Fläche der Platte im rechten Winkel zur Einstrahlrichtung abgegeben wird, wobei diese Anordnung wenigstens zwei vorzugsweise mehrere rasterartig in Längs- und Querreihen angeordnete plattenförmige Elemente der genannten Art umfasst, wobei die plattenförmigen Elemente in ein- oder mehrteiligen Profilrahmen gehaltert sind.

Lichtabstrahlende plattenförmige Elemente der vorgenannten Art, bei denen zum Beispiel über Leuchtstofflampen, LED's oder andere Leuchtmittel über die Stirnseite, das heißt die Kante der Platte in die Platte eingestrahlt wird und dann das Licht über die Fläche der Platte, also senkrecht zur Einstrahlrichtung abgestrahlt wird, sind als solche aus dem Stand der Technik bekannt. Meistens werden diese plattenförmigen Elemente für beleuchtete Werbedisplays eingesetzt, bei denen sich zum Beispiel auf der flächigen Seite ein Bild, zum Beispiel ein Plakat, und/oder Schriftinformation befindet, die dann hinterleuchtet wird. Dadurch, daß die Lichteinstrahlung von der Stirnseite (Kantenseite) des plattenförmigen Elements her erfolgt, lassen sich diese Werbedisplays sehr flach bauen.

Aus der DE 197 55 658 A1 ist eine Leuchte mit einer Anordnung von lichtabstrahlenden plattenförmigen Elementen der eingangs genannten Art bekannt. Bei dieser Leuchte handelt es sich um eine Deckenpendelleuchte, bei der ein Teil des Lichts nach oben abgegeben wird. Bei dieser Leuchte sind zwei Längsreihen von plattenförmigen Elementen vorhanden, die an einen Steg grenzen, wobei kein Zwischenraum verbleibt. Betriebsmittel für die Leuchte, wie z. B. Vorschaltgeräte sind in einem als Hohlkörper ausgebildeten Längsträger oberhalb der Ebene der plattenförmigen Elemente untergebracht, wodurch die Bauhöhe der Leuchte erhöht wird. Die in Längsrichtung gesehen hintereinander liegenden plattenförmigen Elemente grenzen bei dieser Leuchte unmittelbar aneinander.

Bei der aus der DE 197 55 658 A1 bekannten Deckenpendelleuchte erfolgt über eine lichtauskoppelnde Mikrostruktur der Lichtausgang nach unten hin. An der Oberseite ist hingegen die Oberfläche des Lichtleiters lichtundurchlässig, was durch Totalreflexion oder eine Reflexionsschicht erreicht wird. Es ist daher nicht möglich, dass Licht aus anderen Lichtquellen, das heißt, natürliches Licht oder Kunstlicht von der Oberseite her durch den Lichtleiter hindurchfällt.

Im Bereich der allgemeinen Beleuchtung von Räumen in Gebäuden sind sogenannte Lichtdecken bekannt, das heißt Deckeneinbauleuchten, die in einer größeren Anzahl rasterförmig meist in Längs- und Querreihen angeordnet sind und bei denen das Leuchtmittel, zum Beispiel Leuchtstoffröhren, oberhalb von lichtdurchlässigen Platten angeordnet ist, so dass sich die gesamte Raumdecke oder Teile davon flächig beleuchten lassen. Bei diesen Lichtdecken ist es bislang zur Erzielung einer gleichmäßigen als angenehm empfundenen Beleuchtungswirkung notwendig, das Leuchtmittel, das heißt meist Leuchtstoffröhren in einem ausreichenden Abstand oberhalb der lichtdurchlässigen Platten anzuordnen. Dadurch wird ein Schattenwurf vermieden und die einzelne Leuchtstofflampe ist als Lichtquelle für den Betrachter von unten her nicht sichtbar. Es ist also für den Abstand zwischen dem Leuchtmittel und der lichtdurchlässigen Platte notwendig, eine sogenannte Streutiefe einzuhalten. Um dies zu gewährleisten, werden die lichtdurchlässigen Platten durch Abhängevorrichtungen von der eigentlichen Raumdecke, die eine feste Decke zum Beispiel aus Beton ist, abgehängt und das Leuchtmittel wird zwischen der festen Raumdecke und mit ausreichendem Abstand oberhalb der lichtdurchlässigen Platte befestigt. In der Regel haben solche Deckeneinbauleuchtensysteme insgesamt eine Einbautiefe gerechnet von der festen Raumdecke aus von etwa 25cm oder mehr. Dies bedeutet, daß man relativ viel Raum verliert beim Einbau dieser herkömmlichen Lichtdeckensysteme.

Die Aufgabe der vorliegenden Erfindung besteht demgegenüber darin, eine Anordnung von lichtabstrahlenden plattenförmigen Elementen für Raumdecken bzw. Gebäudedecken zu schaffen, die eine große Bandbreite lichttechnischer Möglichkeiten bietet und energieeffizient ist.

Die Lösung dieser Aufgabe liefert eine erfindungsgemäße Anordnung von lichtabstrahlenden plattenförmigen Elementen mit den Merkmalen des Hauptanspruchs.

Erfindungsgemäß ist als Leuchtmittel wenigstens eine in die Stirnseite des plattenförmigen Elements einstrahlende Anzahl LED's oder faseroptische Bauelemente vorgesehen. Diese Leuchtmittel sind einem plattenförmigen Element zugeordnet und strahlen von der Stirnseite her Licht in das plattenförmige Element hinein, wobei das Licht aber als Streulicht über die Fläche der Platte im rechten Winkel zur Einstrahlrichtung abgegeben wird.

Die plattenförmigen Elemente, in die das Licht eingestrahlt wird, geben das Licht im rechten Winkel zur Einstrahlrichtung nach unten hin ab und die plattenförmigen Elemente bilden selbst die Raumdecke beziehungsweise Gebäudedecke. Dadurch hat der Betrachter den Eindruck einer flächigen gleichmäßig lichtabgebenden Raumdecke oder Gebäudedecke. Das Leuchtmittel befindet sich nicht mit Abstand über dem plattenförmigen Element sondern neben diesem in gleicher Höhe und strahlt in die Stirnseite (Kante) des plattenförmigen Elements ein. Dadurch ist es nicht notwendig, den zuvor genannten Streulichtabstand einzuhalten, um das Leuchtmittel für den Betrachter unterhalb der Raumdecke beziehungsweise Gebäudedecke unsichtbar zu machen. Es wird also ganz erheblich die Einbautiefe reduziert. Die Einbautiefe lässt sich auf nur wenige Zentimeter reduzieren je nach Stärke der verwendeten plattenförmigen Elemente und nach Art des Leuchtmittels.

Besonders vorteilhaft ist es, *daß* die plattenförmigen Elemente selbst bei ausgeschaltetem Leuchtmittel in Lichtabstrahlrichtung für natürliches Licht (zum Beispiel Tageslicht) durchlässig sind. *Daher* kann man tagsüber die Leuchtmittel ausschalten, und wenn es sich zum Beispiel um eine Gebäudedecke handelt, ist in diesem Fall oberhalb der plattenförmigen Elemente keine feste Decke, wie zum Beispiel eine Betondecke, aus lichtundurchlässigem Material mehr vorhanden, sondern die Decke aus den lichtdurchlässigen plattenförmigen Elementen wirkt dann wie eine Glasdecke und das natürliche Licht kann genutzt werden. Dieser Vorteil ist auch dann verwirklichbar, wenn es sich bei der Decke aus den erfindungsgemäßen plattenförmigen Elementen um eine Zwischendecke eines Gebäudes oder einer Raumdecke handelt und sich darüber ein Raum befindet, der entweder von künstlichem Licht oder natürlichem Licht beleuchtet wird. Dieses kann dann ebenfalls durch die Decke aus den erfindungsgemäßen plattenförmigen Elementen hindurchgeleitet werden, vorausgesetzt, daß eine solche Decke die notwendigen statischen Bedingungen erfüllt. Im letztgenannten Fall könnte die Decke auch begehbar sein. Es handelt sich dann also um eine tagsüber bei ausreichendem Licht quasi gläserne Raumdecke, die abends nach Einschalten des oder Leuchtmittel(s) als beleuchtete Lichtdecke dient. Dabei können die Übergänge zwischen für natürliches Licht durchlässiger Raumdecke und künstlich beleuchteter Lichtdecke quasi fließend gestaltet werden durch eine entsprechende Helligkeitssteuerung der Leuchtmittel, so daß sich natürliches durchfallendes Licht und künstliches senkrecht zur Einstrahlrichtung abgestrahltes Licht addieren.

Eine bevorzugte Weiterbildung der erfindungsgemäßen Aufgabenlösung sieht vor, daß wenigstens eines der plattenförmigen Elemente weißes Licht abgibt und/oder wenigstens eines der plattenförmigen Elemente farbiges Licht abgibt. Auf diese Weise können weiße und farbige plattenförmige Elemente kombiniert werden, was eine Vielzahl interessanter Gestaltungsmöglichkeiten zulässt.

Vor allem LED's (Leuchtdioden), aber auch beispielsweise faseroptische Bauelemente können verwendet werden, die jeweils neben den plattenförmigen Elementen angeordnet sind und von deren Kantenseite (Stirnseite) her einstrahlen.

Eine bevorzugte Weiterentwicklung der erfindungsgemäßen Anordnung sieht vor, dass als Leuchtmittel die von der Stirnseite her Licht in das plattenförmige Element einstrahlen eine Anzahl LED's verwendet wird, die unterschiedliche Lichtfarben aufweisen. Vorzugsweise werden abwechselnd LED's verschiedener Farben in einer Reihe hintereinander angeordnet. Weiter vorzugsweise sind dies jeweils abwechselnd aufeinanderfolgende rote, grüne und blaue LED's. Vorzugsweise kann man diese LED's bzw. auch andere Leuchtmittel, sofern sie verwendet werden, z. B. Leuchtstofflampen, einzeln oder gruppenweise über eine entsprechende Steuerung ansteuern und ein- bzw. ausschalten und gegebenenfalls dimmen. Die Verwendung verschieden farbiger LED's hat den Vorteil, dass man ein plattenförmiges Element farbig erscheinen lassen kann, die Farbe gegebenenfalls mit der Zeit wechseln kann und außerdem die Helligkeit des in der jeweiligen Farbe ausgestrahlten Lichts ändern kann. Außerdem kann man gleichzeitig verschieden farbige LED's einschalten und damit beliebige Mischfarben erzeugen, die Kombination roter und grüner Leuchtmittel ergibt beispielsweise gelb usw. Durch gleichzeitiges Einschalten einer entsprechenden Anzahl roter, grüner und blauer LED's in gleicher Helligkeitsstärke kann man weißes Licht erzeugen.

Man kann die verwendeten Leuchtmittel kombinieren aus LED's einerseits und Leuchtstofflampen andererseits, was den Vorteil hat, dass man bei Bedarf über Leuchtstofflampen höhere Lichtstärken erzeugen kann. Man kann die unterschiedlichen Leuchtmittel dabei so anordnen, dass man eine erste Anzahl Leuchtmittel von einer Stirnseite her in das plattenförmige Element einstrahlen lässt und eine zweite Anzahl Leuchtmittel beispielsweise von der gegenüberliegenden Stirnseite her in das plattenförmige Element einstrahlen lässt. Dabei kann man wiederum die ersten Leuchtmittel so ansteuern, dass von der einen Seite her Licht in einer anderen Farbe in das plattenförmige Element eingestrahlt wird als von der anderen, beispielsweise der gegenüberliegenden Seite.

Vorzugsweise bestehen die plattenförmigen Elemente aus einem Material, welches eine derartige Lichtabsorption, Lichtreflektion und/oder Lichtstreuung hat, dass bei Einstrahlen von der einen Stirnseite her über die ersten Leuchtmittel in das plattenförmige Element hinein das Licht nur über eine Teilstrecke in die Platte eindringt, so dass man bei Verwendung andersfarbiger oder weißer Leuchtmittel und Einstrahlung von der gegenüberliegenden Seite die Platte zweifarbig erscheinen lassen kann.

Eine bevorzugte Weiterbildung der Erfindung sieht vor, dass man neben den ersten Leuchtmitteln und den zweiten Leuchtmitteln, die vorzugsweise von gegenüberliegenden Seiten her in das plattenförmige Element einstrahlen eine dritte Anzahl Leuchtmittel in Form von LED's oder Leuchtstofflampen vorsieht, die von einer dritten Stirnseite des plattenförmigen Elements her Licht in dieses einstrahlen, wobei diese dritte Einstrahlrichtung dann quer zur Einstrahlrichtung der ersten und/oder zweiten Leuchtmittel ausgerichtet ist. Dies ist eine konstruktiv besonders einfache Lösung, wenn man beispielsweise über LED's farbiges Licht erzeugen möchte und wahlweise die Platte in weißem Licht erstrahlen lassen will. Man steuert dann wenn farbige Lichtabgabe gewünscht ist die LED's an, die von der einen Stirnseite her und/oder auch gegebenenfalls von zwei gegenüberliegenden Stirnseiten her farbiges Licht in die Platte einstrahlen. Will man die Platte in weißem Licht erscheinen lassen und gegebenenfalls zur Raumbeleuchtung eine höhere Helligkeit einstellen, dann verwendet man LED's oder Leuchtstofflampen, die von der dritten Stirnseite her weißes Licht in die Platte einstrahlen. Man kann Leuchtstofflampen verwenden, wenn höhere Lichtstärken erwünscht sind. Weißes Licht lässt sich aber auch, wie oben bereits erwähnt wurde, durch Kombination verschiedenfarbiger LED's erzeugen. Alternativ dazu können auch weiße LED's für die allgemeine Beleuchtung verwendet werden, insbesondere wenn diese die notwendige Lichtstärke aufweisen.

Wichtig ist bei den vorgenannten Ausführungsvarianten in jedem Fall, dass die Steuerung so ausgelegt ist, dass man die Leuchtmittel einzeln oder in Gruppen ansteuern kann, so dass man nur immer die für die gewünschten Lichtabstrahleffekte notwendigen Leuchtmittel ein- bzw. ausschaltet. Vorzugsweise kann man auch jeweils die Helligkeit einzelner Leuchtmittel stufenlos verändern über die genannte Steuerung.

Man kann auch gegebenenfalls an allen vier Stirnseiten eines plattenförmigen Elements jeweils Leuchtmittel anordnen, sei es in Form von LED's, sei es in Form von Leuchtstofflampen oder Kombinationen dieser Leuchtmittel. Auch die Verwendung farbiger Leuchtstofflampen ist möglich.

Weiterhin ist es möglich, die Anordnung der vorhandenen Leuchtmittel und/oder die jeweilige Ansteuerung dieser Leuchtmittel für jedes plattenförmige Element der Anordnung unterschiedlich auszubilden. Dadurch lassen sich eine Vielzahl optischer Effekte erzeugen, indem man z. B. eines der plattenförmigen Elemente rot erscheinen lässt und das benachbarte blau oder aber auch Mischfarben wie violett, orange verwendet usw. Weiterhin besteht die interessante Möglichkeit einzelne plattenförmige Elemente farbig erscheinen zu lassen gegebenenfalls in unterschiedlichen Farben, um so in erster Linie eine Effektbeleuchtung zu erzielen und andere plattenförmige Elemente wiederum weiß auszuleuchten, gegebenenfalls mit einer größeren Lichtstärke, so dass diese für eine Allgemeinbeleuchtung sorgen. Prinzipiell ist es außerdem möglich, auch eine derartige Gebäudedecke als großdimensionierte Werbefläche einzusetzen, indem man durch Ausleuchten bestimmter Gruppen von plattenförmigen Elementen in bestimmter Anordnung Schriftzeichen, Embleme oder sonstige graphische Darstellungen erzeugt.

Die vorliegende Erfindung wird nachfolgend anhand von Ausführungsbeispielen unter Bezugnahme auf die beiliegenden Zeichnungen näher beschrieben. Dabei zeigen
- Fig. 1: eine Unteransicht auf einen insgesamt vier Felder umfassenden Teilbereich einer erfindungsgemäßen Lichtdecke;
- Fig. 2: eine Schnittansicht durch die Lichtdecke, gesehen in Richtung der Pfeile II-II in Fig. 1;
- Fig. 3: eine Schnittansicht durch eine den Trägerprofilen zugeordnete Profilabdeckung;
- Fig. 4: eine Schnittansicht, gesehen in Richtung der Pfeile IV-IV in Fig. 1;
- Fig. 5: eine Schnittansicht durch eine den Querprofilen des Verkleidungssystems zugeordnete Profilabdeckung,
- Fig. 6: eine perspektivische Ansicht einer erfindungsgemäßen Lichtdecke gemäß einem anderen Ausführungsbeispiel, wobei bei dieser Variante die Lichtdecke für von oben her einfallendes Licht durchlässig ist.

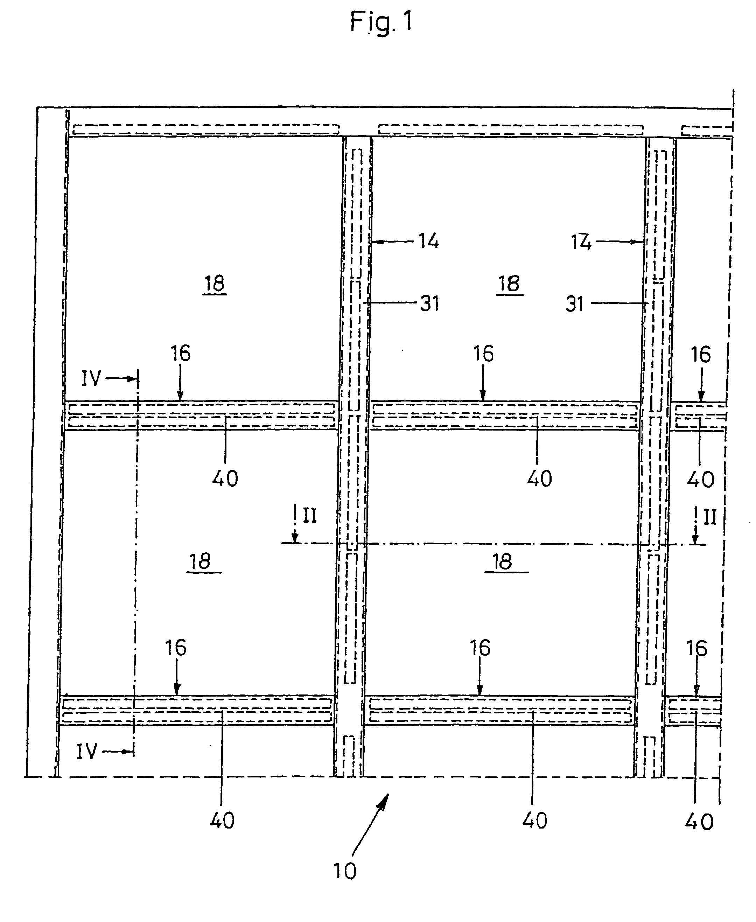

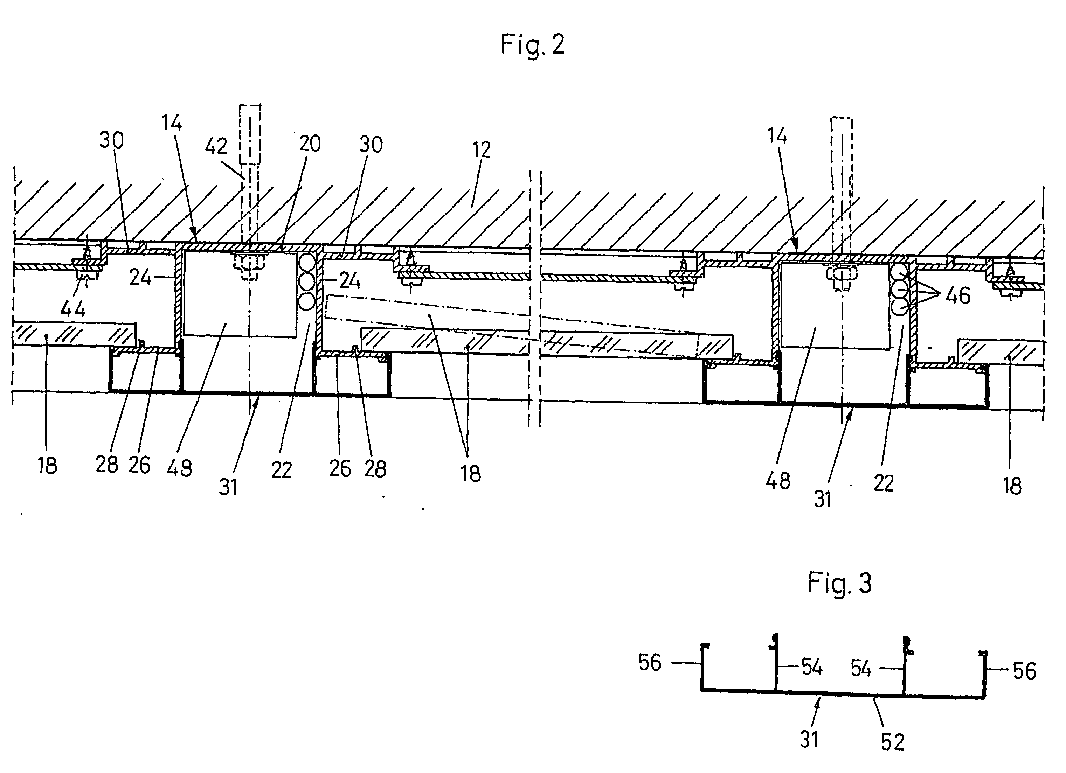

Die in den Fig. 1 bis 5 als erstes Ausführungsbeispiel für ein erfindungsgemäßes lichtabstrahlendes Verkleidungssystem dargestellte Lichtdecke 10 besteht in ihren lichtabstrahlenden Bereichen aus in relativ geringem Abstand unterhalb der Rohbaudecke 12 eines Gebäudes durch ein System von metallischen Halterungsprofilen 14, 16 gehalterten dünnen Platten 18 aus lichtdurchlässigem Kunststoff, z.B. Acrylglas, (Polymethylacrylat; PMMA). Die Halterungsprofile werden von mit Abstand von und parallel zueinander verlaufenden, an der zu verkleidenden Gebäudewand, d.h. hier an der Decke 12, befestigbaren Tragprofilen 14 und mit Abstand zwischen benachbarten Tragprofilen 14 anbringbaren Querprofilen 16 gebildet, die ein Rahmenwerk mit einer Vielzahl von zwischen den Halterungsprofilen gelegenen Feldern bilden, welche durch die Platten 18 geschlossen sind. Wie in Fig. 2 ersichtlich ist, sind die im speziellen Fall als Aluminium-Druckgussprofile ausgebildeten Tragprofile 14 als langgestreckte Kanalprofile mit einem deckenseitig vorgesehenen, im wesentlichen ebenflächigen Befestigungs-Flanschabschnitt 20, zwei mit Abstand von den Rändern des Flanschabschnitts 20 rechtwinklig vortretenden und zwischen sich einen Installationskanal 22 bildenden streifenförmigen Wandabschnitten 24 und an den deckenabgewandten Rändern der Wandabschnitte 24 jeweils voneinander wegweisend angeordnete deckenparallele streifenförmigen Platten-Halterungsabschnitte 26 ausgebildet. Auf den deckenzugewandten Randbereichen der Halterungsabschnitte 26 sind die Ränder der dünnen Platten 18 gehalten, wobei jeweils eine niedrige, von der deckenzugewandten Flachseite der Halterungsabschnitte 26 vortretende Längsrippe 28 eine deckenparallele Verschiebung der auf den Halterungsabschnitten 26 aufgelagerten Platten 18 verhindert.

Parallel zur den Platten-Halterungsabschnitten 26 in Richtung zum Befestigungs-Flanschabschnitt 20 versetzt sind an den streifenförmigen Wandabschnitten 24 jeweils in die gleiche Richtung wie die Halterungsabschnitte 26 weisende streifenförmige Anschlussabschnitte 30 angesetzt, deren freie Randbereiche in parallelem Abstand von der zu verkleidenden Decke 12 verlaufen. Der Installationskanal 22 ist durch eine auf seine offene Vorderseite aufrastbare Profilabdeckung 31 verschliessbar, die in Fig. 3 gesondert im Querschnitt dargestellt ist.

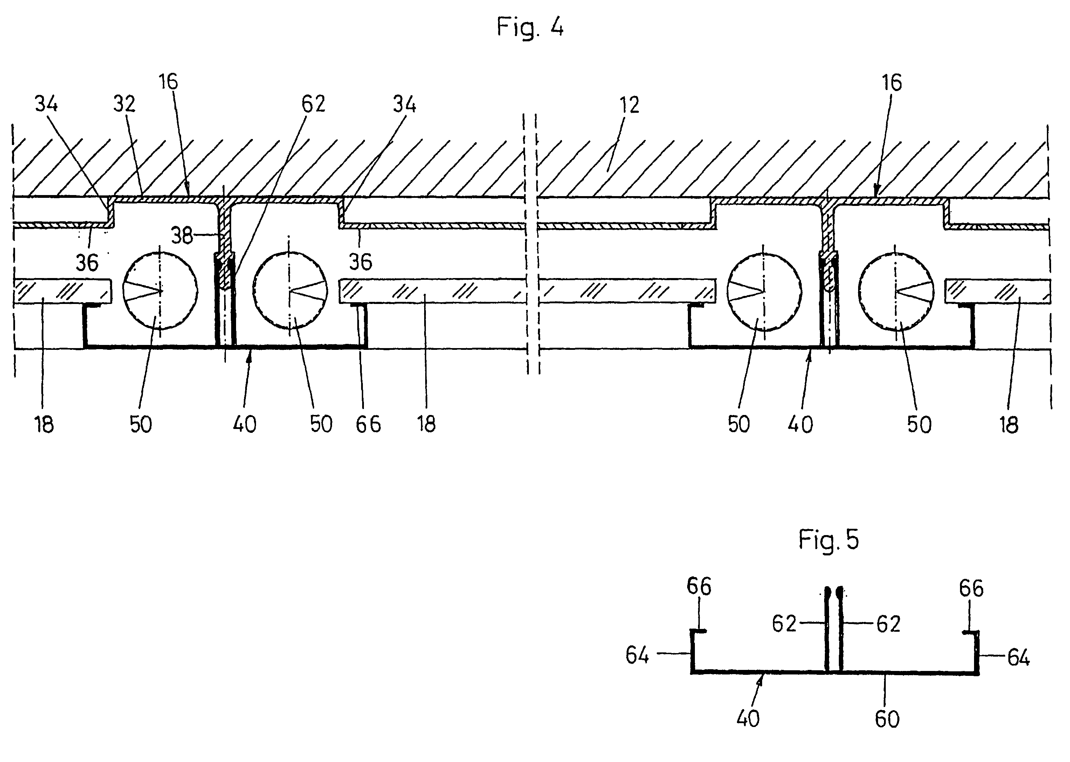

Die in Fig. 4 im Schnitt dargestellten Querprofile 16 weisen ebenfalls einen deckenseitig vorgesehenen langgestreckten, im wesentlichen ebenen Auflage-Flanschabschnitt 32 auf, an dessen seitlichen Rändern im wesentlichen rechtwinklig vortretende niedrige streifenförmige Wandabschnitte 34 angesetzt sind, an deren deckenabgewandten Rändern jeweils in entgegengesetzte Richtung voneinander wegweisende parallel zu den Flanschabschnitten 32 verlaufende Befestigungsabschnitte 36 angesetzt sind, wobei etwa mittig zwischen den streifenförmigen Wandabschnitten ein rechtwinklig vortretender Rippenabschnitt 38 vom Auflage-Flanschabschnitt 32 vortritt, auf dessen flanschabschnittsabgewandtem freien Rand jeweils eine nachstehend noch in Verbindung mit Fig. 5 beschriebene Profilabdeckung 40 befestigbar ist.

Die Tragprofile können in der in Fig. 2 angedeuteten Weise mit der deckenzugewandten Fläche des Befestigungs-Flanschabschnitts 20 an der Decke anliegend mit Metalldübeln 42 befestigt werden.

Dagegen werden die Querprofile 16 jeweils in ihrem Endbereich an benachbarten Tragprofilen 14 befestigt, wofür die streifenförmigen Anschlussabschnitte 30 der Tragprofile 14 und die Befestigungsabschnitte 38 der Querprofile 16 in der bestimmungsgemäßen Montagestellung an der Decke 12 in Bezug auf ihren Abstand von der Decke derart unterschiedlich bemessen sind, dass die Enden der Befestigungsabschnitte der Querprofile in bündiger Übereinanderlage mit den streifenförmigen Anschlussabschnitten der jeweils zugeordneten Tragprofile stehen, so dass die Abschnitte in den übereinander liegenden Bereichen, z.B. durch die in Fig. 2 gezeigten Schrauben 44 miteinander verbunden werden können.

Die von den Tragprofilen 14 und den Querprofilen 16 gebildeten Felder werden dann mit den Platten 18 geschlossen, indem diese in der in Fig. 2 gestrichelt angedeuteten Weise schräg in den oberhalb der Platten-Halterungsabschnitte 26 gebildeten, von den Halterungsprofilen umschlossenen Raum eingeschoben und dann auf der deckenzugewandten oberen Seite der Platten-Halterungsabschnitte 26 aufgesetzt werden. Durch die Längsrippen 28 werden die Platten 18 in der bestimmungsgemäßen Montagestellung gegen horizontale Verschiebung gesichert gehalten. Im vorliegenden Fall, in welchem das Verkleidungssystem unter der Decke 12 eines Gebäudes montiert ist, ist eine zusätzliche Befestigung der Platten 18 an den Halterungsprofilen nicht erforderlich. Wenn andererseits senkrechte Wände in Gebäuden oder äußere Fassaden von Gebäuden in der erfindungsgemäßen Weise verkleidet werden sollen, müssen die Platten zusätzlich an den Tragprofilen 14 befestigt werden, wofür dann - hier nicht gezeigte - Befestigungsmittel vorgesehen werden müssen, mit denen die auf den Platten-Halterungsabschnitten 26 aufliegenden Bereiche der Platten 18 mit den Halterungsabschnitten 26 verbunden werden. Hierzu können beispielsweise von der deckenabgewandten Unterseite der Platten-Halterungsabschnitte 28 aus betätigbare Klemmverbinder verwendet werden.

Die zwischen den Wandabschnitten 24 der Tragprofile gebildeten Installationskanäle 22 stehen für die Verlegung von elektrischen Leitungen 46 und weitere Starter oder Ansteuerorgane, z.B. Vorschaltgeräte für in den Querprofilen 16 angeordnete Leuchtstoffröhren 50 zur Verfügung. In Fig. 4 ist die Lage solcher Leuchtstoffröhren 50 schematisch dargestellt, wobei erkennbar ist, dass diese so in den Querprofilen 16 gehaltert sind, dass sie in geringem Abstand parallel zur zugewandten Begrenzungskante der Platte 18 ausgerichtet im Querprofil verlaufend gehalten sind. Die in den Querprofilen vorzusehenden Fassungen für die Leuchtstoffröhren 50 sind dabei nicht dargestellt. Das von den Leuchtstoffröhren 50 abgestrahlte Licht wird also in die benachbarten, die Platten 18 begrenzenden Stirnflächen eingestrahlt und dann über die nach unten weisende Flachseite der Platte in den darunter liegenden Raum abgestrahlt, wobei diese Abstrahlung großflächig mit relativ geringer Leuchtdichte erfolgt, so dass eine gleichmäßige Beleuchtung des Raums erhalten wird, ohne dass eine Blendgefahr für die im Raum befindlichen Personen besteht. Durch geeignete Rasterbedruckung der durchsichtigen bzw. lichtdurchlässigen Platten 18 oder auch durch Einlagerung von lichtstreuenden oder reflektierenden Partikeln in die Platte selbst ist die Abstrahlcharakteristik ebenso wie die Transparenz der Platte 18 vorgegebenen Anforderungen anpassbar.

Das System der an der Decke 12 montierten Tragprofile 14 und Querprofile 16 wird nach der Installation der elektrischen Leitung 46, der Vorschaltgeräte 48 und der Leuchtstoffröhren 50 durch die jeweils zugeordneten Profilabdeckungen 31 bzw. 40 verschlossen. Eine den Tragprofilen zugeordnete Profilabdeckung 31 ist in Fig. 3 im Querschnitt dargestellt. Sie weist eine langgestreckte ebenflächige Vorderwand 52 auf, deren Breite etwas größer als die über die freien Ränder der Platten-Halterungsabschnitte 26 gemessene Breite der Tragprofile 14 ist. Von der Rückseite der Vorderwand 52 treten rechtwinklig Stegabschnitte 54 vor, welche mit den den Installationskanal 22 begrenzenden streifenförmigen Wandabschnitten 24 des Tragprofils verrastbar sind. An den gegenüberliegenden Längsrändern der Vorderwand 52 der Profilabdeckung 31 sind zu den Platten-Halterungsabschnitten 26 zurückgekantete Seitenwände 56 angesetzt, deren Höhe so bemessen ist, dass sie in der in Fig. 2 gezeigten bestimmungsgemäßen Montagestellung seitlichen Zwischenraum zwischen der Vorderwand 52 und den Platten-Halterungsabschnitten 28 verschließen.

Auch die in Fig. 5 gezeigte, Profilabdeckung 40 für Querprofile 16 weist eine langgestreckte, im speziellen Fall ebenflächige Vorderwand 60 auf, von deren zum Querprofil 16 weisender Rückseite zwei benachbarte streifenförmige parallele Stegabschnitte 62 vortreten, welche auf dem freien Randbereich des Rippenabschnitts 38 der Querprofile 16 aufrastbar sind. An den seitlichen Rändern der Vorderwand 60 der Profilabdeckung 40 sind dann wieder zum Querprofil 16 weisende umgekantete Seitenwände 64 angesetzt, die sich bis zur Unterseite der Platte 18 erstrecken und mit von ihren freien Enden rechtwinklig aufeinander zu weisende umgekanteten Randabschnitten 66 an der Platte 18 anlegen. Nach Montage aller Profilabdeckungen 31 und 40 bietet sich dem Betrachter der Lichtdecke der Anblick eines Rahmenwerks aus sich rechtwinklig kreuzenden streifenförmigen Rahmenelementen, welche jeweils lichtabstrahlende rechteckige oder quadratische Fläche umschließen.

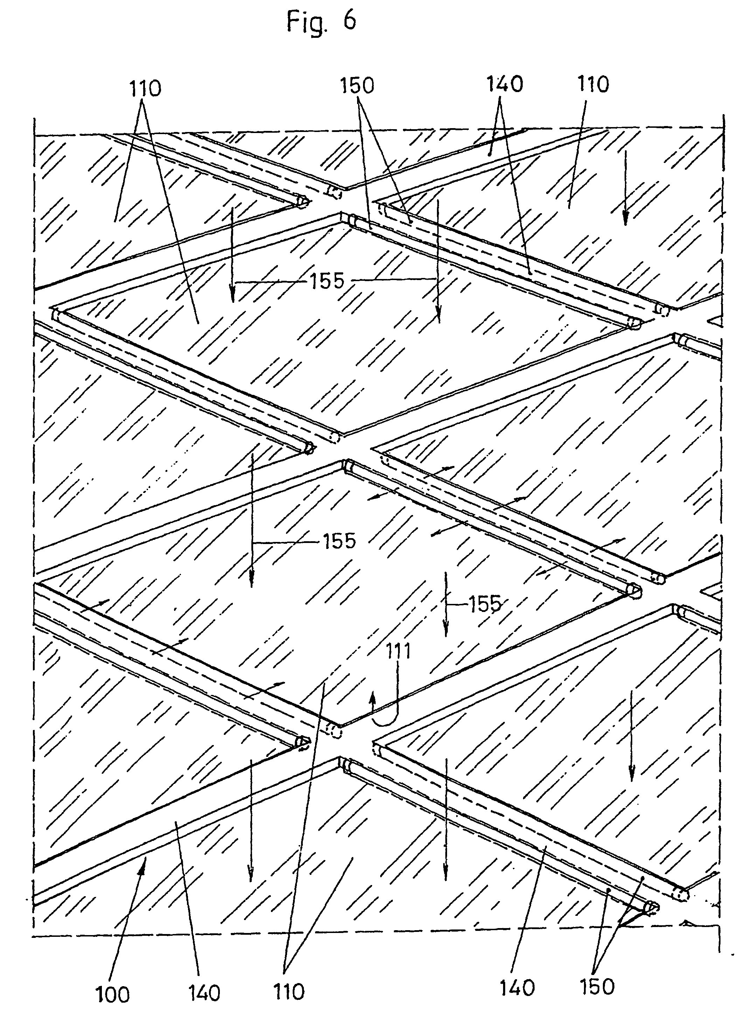

Es wird nun auf Fig. 6 Bezug genommen. Diese Zeichnung zeigt ein weiteres Ausführungsbeispiel in schematisch vereinfachter perspektivischer Ansicht, bei dem die erfindungsgemäße Anordnung als Lichtdecke nicht unterhalb einer festen Raumdecke angeordnet ist, so daß bei ausgeschaltetem Leuchtmittel von oben her einfallendes Licht in Pfeilrichtung durch die lichtdurchlässigen plattenförmigen Elemente hindurch fallen kann. Dadurch kann Tageslicht oder Kunstlicht aus darüberliegenden Räumen genutzt werden zur Beleuchtung des unter der Anordnung liegenden Raums. Die erfindungsgemäße Anordnung kann auch die Gebäudedecke selbst bilden. Es handelt sich dann um eine tagsüber lichtdurchlässige Decke, bei der man mit zunehmender Dunkelheit gegebenenfalls sukzessive durch entsprechende Helligkeitssteuerung künstliches Licht seitlich in die plattenförmigen Elemente einstrahlen und nach unten hin abstrahlen kann zur Raumbeleuchtung. Dies hat den besonderen Vorteil, daß der Übergang vom Einfall des Tageslichts zu dem künstlichen Licht für die in dem Raum befindlichen Personen quasi unmerklich geschieht. Die erfindungsgemäßen plattenförmigen Elemente können so ausgebildet sein, daß sie weißes Licht abgeben, sie können aber auch farbiges Licht abgeben, dadurch daß sie entweder entsprechend bedruckt sind oder daß geeignete Leuchtmittel als farbige Lichtquellen verwendet werden. Man könnte auch die plattenförmigen Elemente ganz oder teilweise entsprechend einfärben.

Die Anordnung aus den plattenförmigen Elementen ist insgesamt in Fig. 6 mit 100 bezeichnet. Die einzelnen plattenförmigen Elemente der Anordnung sind mit 110 bezeichnet. Man kann in Fig. 6 erkennen, daß die plattenförmigen Elemente 110 wiederum rasterartig in Längs- und Querreihen angeordnet sind und daß die plattenförmigen Elemente 110 in Profilrahmen 140 gehaltert sind. Diese Profilrahmen 140 verlaufen in Quer- und in Längsrichtung. Die in einer Richtung verlaufenden Profilrahmen 140 decken das Leuchtmittel, z.B. Leuchtstofflampen 150 ab. Stattdessen können aber beispielsweise auch LED's verwendet werden. Dadurch sind die Leuchtmittel 150 von unten her nicht sichtbar. Die Leuchtmittel 150 strahlen wie bei dem zuvor beschriebenen Ausführungsbeispiel über die Kanten bzw. Stirnseiten das Licht in die plattenförmigen Elemente 110 ein, in denen das Licht dann um 90° umgelenkt und nach unten hin abgegeben wird, wenn das Leuchtmittel 150 an ist. Wenn das jeweilige Leuchtmittel 150 dagegen ausgeschaltet ist, dann sind die plattenförmigen Elemente 110 von oben nach unten durchlässig, das heißt senkrecht zur Einstrahlrichtung des künstlichen Lichts welches von den Leuchtmitteln kommt, z.B. für Tageslicht welches von oberhalb der plattenförmigen Elemente 110 her eingestrahlt wird. Dieses Tageslicht ist in der Zeichnung Fig. 6 durch Pfeile 155 angedeutet und fällt durch die plattenförmigen Elemente 110 hindurch und kann den darunter liegenden Raum erhellen. Um einen solchen Durchfall von Tageslicht zu ermöglichen, kann man beispielsweise die unterseitigen Lichtaustrittsflächen 111 der plattenförmigen Elemente 110 in einem Punktraster weiß oder farbig bedrucken, wobei das Punktraster jedoch nicht zu dicht ist und einen ausreichenden Lichtdurchtritt des Tageslichts ermöglicht. Andererseits hat das Punktraster bei geeigneter Materialwahl der plattenförmigen Elemente 110, die z.B. aus Acrylglas sein können, die gewünschte Streuwirkung, wenn bei fehlendem Tageslicht nach Einschaltung des Leuchtmittels 150 künstliches Licht seitlich in das plattenförmige Element 110 eingestrahlt, dort um 90° umgelenkt und dann als Streulicht nach unten abgegeben wird.

## Patentansprüche

1. Anordnung von lichtabstrahlenden plattenförmigen Elementen (110) bei der wenigstens einem plattenförmigen Element wenigstens ein Leuchtmittel (150) zugeordnet ist, welches von der Stirnseite her Licht in das plattenförmige Element hinein abstrahlt und dieses Licht als Streulicht über die Fläche der Platte im rechten Winkel zur Einstrahlrichtung abgegeben wird, wobei diese Anordnung wenigstens zwei vorzugsweise mehrere rasterartig in Längs- und Querreihen angeordnete plattenförmige Elemente der genannten Art umfasst, wobei die plattenförmigen Elemente in ein- oder mehrteiligen Profilrahmen (140) gehaltert sind,
**dadurch gekennzeichnet, dass** als Leuchtmittel wenigstens eine in die Stirnseite des plattenförmigen Elements einstrahlende Anzahl LED's oder faseroptische Bauelemente vorgesehen sind, wobei die Anordnung selbst eine Raumdecke beziehungsweise Gebäudedecke bildet und wenigstens teilweise im Bereich derjenigen plattenförmigen Elemente (110), bei denen das diesen zugeordnete Leuchtmittel ausgeschaltet ist, für von oberhalb der Anordnung eintretendes natürliches Licht und/oder Kunstlicht durchlässig ist.

2. Anordnung von lichtabstrahlenden plattenförmigen Elementen nach Anspruch 1, bei der wenigstens eines der plattenförmigen Elemente (110) bei ausgeschaltetem Leuchtmittel (150) in Lichtabstrahlrichtung für natürliches Licht (Tageslicht) durchlässig ist.

3. Anordnung von lichtabstrahlenden plattenförmigen Elementen nach einem der Ansprüche 1 oder 2, bei der wenigstens eines der plattenförmigen Elemente (110) weißes Licht abgibt und/oder wenigstens eines der plattenförmigen Elemente farbiges Licht abgibt.

4. Anordnung von lichtabstrahlenden plattenförmigen Elementen nach einem der Ansprüche 1 bis 3, **dadurch gekennzeichnet, dass** die plattenförmigen Elemente (18, 110) durchsichtig beziehungsweise lichtdurchlässig sind und durch eine geeignete Rasterbedruckung oder durch Einlagerung von lichtstreuenden oder reflektierenden Partikeln in die Platte die Abstrahlcharakteristik und die Transparenz der Platte an vorgegebene Anforderungen anpassbar sind.

5. Anordnung von lichtabstrahlenden plattenförmigen Elementen nach einem der Ansprüche 1 bis 4, **dadurch gekennzeichnet, dass** als von der Stirnseite des plattenförmigen Elements her einstrahlende Leuchtmittel eine Anzahl LED's vorgesehen sind, die unterschiedliche Lichtfarben aufweisen, wobei abwechselnd LED's verschiedener Farben in einer Reihe hintereinander angeordnet sind, vorzugsweise jeweils abwechselnd aufeinanderfolgend rote, grüne und blaue LED's und wobei eine Steuerung vorgesehen ist, mittels derer die LED's einzeln oder gruppenweise ansteuerbar und ein- bzw. ausschaltbar sind.

6. Anordnung von lichtabstrahlenden plattenförmigen Elementen nach einem der Ansprüche 1 bis 5, **dadurch gekennzeichnet, dass** eine Anzahl erster Leuchtmittel in Form von LED's oder wenigstens einer Leuchtstofflampe vorgesehen ist, die von einer Stirnseite her Licht in das plattenförmige Element einstrahlen, und dass eine zweite Anzahl Leuchtmittel in Form von LED's oder wenigstens einer Leuchtstofflampe vorgesehen ist, die Licht von der der ersten Anzahl Leuchtmittel gegenüberliegenden Stirnseite her in das plattenförmige Element einstrahlen, wobei eine Steuerung vorgesehen ist, mittels derer die genannten und/oder zweiten Leuchtmittel jeweils einzeln oder gruppenweise ansteuerbar sind.

7. Anordnung von lichtabstrahlenden plattenförmigen Elementen nach einem der vorhergehenden Ansprüche, **dadurch gekennzeichnet, dass** die plattenförmigen Elemente aus einem derartigen Material bestehen bzw. an der lichtabgebenden Seite derartig bedruckt sind, dass aufgrund von Lichtabsorption, Lichtreflektion und/oder Lichtstreuung von der einen Stirnseite her über erste Leuchtmittel eingestrahltes Licht das plattenförmige Element nur etwa bis zur Plattenmitte in weißem oder farbigem Licht erscheinen lässt.

8. Anordnung von lichtabstrahlenden plattenförmigen Elementen nach einem der vorhergehenden Ansprüche, **dadurch gekennzeichnet, dass** eine dritte Anzahl Leuchtmittel in Form von LED's oder wenigstens einer Leuchtstofflampe vorgesehen ist, die von einer dritten Stirnseite her Licht in das plattenförmige Element einstrahlen, wobei die Einstrahlrichtung quer zur Einstrahlrichtung der ersten und/oder zweiten Leuchtmittel erfolgt.

9. Anordnung von lichtabstrahlenden plattenförmigen Elementen nach einem der vorhergehenden Ansprüche, **dadurch gekennzeichnet, dass** die Leuchtmittel so ansteuerbar sind, dass von wenigstens einer Stirnseite her weißes Licht in ein plattenförmiges Element einstrahlbar ist und von wenigstens einer quer zu der ersten Stirnseite verlaufenden zweiten Stirnseite her farbiges Licht in das plattenförmige Element einstrahlbar ist.

10. Anordnung von lichtabstrahlenden plattenförmigen Elementen nach einem der vorhergehenden Ansprüche, **dadurch gekennzeichnet, dass** an allen vier Stirnseiten eines plattenförmigen Elements Leuchtmittel in Form von LED's und/oder Leuchtstofflampen angeordnet sind, die jeweils über eine Steuerung einzeln separat oder in Gruppen ansteuerbar und ein- und ausschaltbar oder in ihrer Helligkeit veränderbar (dimmbar) sind.

11. Anordnung von lichtabstrahlenden plattenförmigen Elementen nach einem der vorhergehenden Ansprüche, **dadurch gekennzeichnet, dass** an einer oder mehrerer Stirnseiten des plattenförmigen Elements eine Anzahl von LED's in den Lichtfarben rot, grün und blau angeordnet sind, die über eine Steuerung gleichzeitig so ansteuerbar sind, dass sie insgesamt weißes Licht in das plattenförmige Element einstrahlen.

## Claims

1. Arrangement of light-emitting panel-shaped elements (110) in which at least one panel-shaped element is assigned at least one illuminating means (150), which emits light into the panel-shaped element from the end face and this light is given off as diffused light over the surface area of the panel at right angles to the direction of irradiation, this arrangement comprising at least two, preferably more, panel-shaped elements of the stated type arranged like a grid in longitudinal and transverse rows, the panel-shaped elements being secured in one-part or multi-part profile frames (140), **characterized in that** at least a number of LEDs or fibre-optic components radiating into the end face of the panel-shaped element are provided as illuminating means, the arrangement itself forming a ceiling or intermediate floor and being at least partly transparent to natural light and/or artificial light entering from above the arrangement in the region of those panel-shaped elements (110) for which the illuminating means assigned to them is switched off.

2. Arrangement of light-emitting panel-shaped elements according to Claim 1, in which at least one of the panel-shaped elements (110) is transparent to natural light (daylight) in the light-emitting direction when the illuminating means (150) is switched off.

3. Arrangement of light-emitting panel-shaped elements according to either of Claims 1 and 2, in which at least one of the panel-shaped elements (110) emits white light and/or at least one of the panel-shaped elements emits coloured light.

4. Arrangement of light-emitting panel-shaped elements according to one of Claims 1 to 3, **characterized in that** the panel-shaped elements (18, 110) are translucent or transparent to light and the radiation characteristic and the transparency of the panel can be adapted to prescribed requirements by suitable printing of a pattern or by incorporation of light-scattering or reflecting particles in the panel.

5. Arrangement of light-emitting panel-shaped elements according to one of Claims 1 to 4, **characterized in that** a number of LEDs which have different colours of light are provided as the illuminating means radiating from the end face of the panel-shaped element, LEDs of different colours being alternately arranged one behind another in a row, red, green and blue LEDs preferably alternating in succession with one another, and a controller being provided, by means of which the LEDs can be activated and switched on or off individually or in groups.

6. Arrangement of light-emitting panel-shaped elements according to one of Claims 1 to 5, **characterized in that** a number of first illuminating means in the form of LEDs or at least one fluorescent lamp, which radiate light into the panel-shaped element from one end face, are provided and **in that** a second number of illuminating means in the form of LEDs or at least one fluorescent lamp, which radiate light into the panel-shaped element from the end face opposite from the first number of illuminating means, are provided, a controller being provided, by means of which the said and/or second lighting means can be respectively activated individually or in groups.

7. Arrangement of light-emitting panel-shaped elements according to one of the preceding claims, **characterized in that** the panel-shaped elements consist of such a material or are printed on the light-emitting side in such a way that, on account of light absorption, light reflection and/or light diffusion, light radiated from one end face by means of first illuminating means makes the panel-shaped element appear in white or coloured light only approximately up to the middle of the panel.

8. Arrangement of light-emitting panel-shaped elements according to one of the preceding claims, **characterized in that** a third number of illuminating means in the form of LEDs or at least one fluorescent lamp, which radiate light into the panel-shaped element from a third end face, are provided, the direction of irradiation taking place transversely to the direction of irradiation of the first and/or second illuminating means.

9. Arrangement of light-emitting panel-shaped elements according to one of the preceding claims, **characterized in that** the illuminating means can be activated in such a way that white light can be radiated into the panel-shaped element from at least one end face and coloured light can be radiated into the panel-shaped element from at least one second end face, running transversely to the first end face.

10. Arrangement of light-emitting panel-shaped elements according to one of the preceding claims, **characterized in that** illuminating means in the form of LEDs and/or fluorescent lamps which can respectively be activated and switched on and off, or varied in their brightness (dimmed), by means of a controller, each individually or in groups, are arranged on all four end faces of a panel-shaped element.

11. Arrangement of light-emitting panel-shaped elements according to one of the preceding claims, **characterized in that** a number of LEDs, in the colours of light red, green and blue, which can be activated simultaneously by means of a controller in such a way that they altogether radiate white light into the panel-shaped element, are arranged on one or more end faces of the panel-shaped element.

## Revendications

1. Arrangement d'éléments (110) en forme de panneaux émettant de la lumière avec lequel un moyen d'éclairage (150) est associé à au moins un élément en forme de panneau, lequel injecte de la lumière dans l'élément en forme de panneau depuis le côté frontal et cette lumière est délivrée sous forme de lumière diffusée par la surface du panneau à angle droit par rapport au sens de l'entrée, cet arrangement comprenant au moins deux, de préférence plus de deux éléments en forme de panneaux du type mentionné disposés en rangées longitudinales et transversales à la manière d'une grille, les éléments en forme de panneau étant maintenus dans des cadres profilés (140) en une ou en plusieurs parties, **caractérisé en ce que** le moyen d'éclairage prévu est au moins un nombre donné de LED ou de composants à fibre optique qui injecte de la lumière dans le côté frontal de l'élément en forme de panneau, l'arrangement lui-même formant le plafond d'une pièce ou le plafond d'un bâtiment et étant transparent pour la lumière naturelle et/ou la lumière artificielle qui pénètre par le dessus de l'arrangement, au moins en partie dans la zone des éléments en forme de panneaux (110) pour lesquels le moyen d'éclairage qui leur est associé est éteint.

2. Arrangement d'éléments en forme de panneaux émettant de la lumière selon la revendication 1, avec lequel au moins un des éléments en forme de panneaux (110) est transparent pour la lumière naturelle (lumière du jour) dans le sens de l'émission de la lumière lorsque le moyen d'éclairage (150) est éteint.

3. Arrangement d'éléments en forme de panneaux émettant de la lumière selon l'une des revendications 1 ou 2, avec lequel au moins un des éléments en forme de panneaux (110) délivre de la lumière blanche et/ou au moins un des éléments en forme de panneaux délivre de la lumière colorée.

4. Arrangement d'éléments en forme de panneaux émettant de la lumière selon l'une des revendications 1 à 3, **caractérisé en ce que** les éléments en forme de panneaux (18, 110) sont transparents ou laissent passer la lumière et les caractéristiques d'émission et la transparence du panneau peuvent être adaptées aux exigences prédéfinies par une impression appropriée de la grille ou en insérant dans le panneau des particules diffusant la lumière ou réfléchissantes.

5. Arrangement d'éléments en forme de panneaux émettant de la lumière selon l'une des revendications 1 à 4, **caractérisé en ce que** le moyen d'éclairage prévu qui injecte de la lumière depuis le côté frontal de l'élément en forme de panneau est un nombre donné de LED qui présentent des couleurs de lumière différentes, des LED de différentes couleurs étant disposées en alternance l'une derrière l'autre dans une rangée, de préférence à chaque fois successivement et en alternance des LED rouges, vertes et bleues et une commande étant prévue à l'aide de laquelle les LED peuvent être commandées et allumées ou éteintes individuellement ou par groupe.

6. Arrangement d'éléments en forme de panneaux émettant de la lumière selon l'une des revendications 1 à 5, **caractérisé en ce qu'**il est prévu un nombre donné de premiers moyens d'éclairage sous la forme de LED ou d'au moins un tube fluorescent qui injectent de la lumière dans l'élément en forme de panneau depuis un côté frontal et qu'il est prévu un deuxième nombre donné de moyens d'éclairage sous la forme de LED ou d'au moins un tube fluorescent qui injectent de la lumière dans l'élément en forme de panneau depuis le côté frontal à l'opposé du premier nombre donné de moyens d'éclairage, une commande étant prévue à l'aide de laquelle lesdits et/ou les deuxièmes moyens d'éclairage peuvent à chaque fois être commandés individuellement ou par groupe.

7. Arrangement d'éléments en forme de panneaux émettant de la lumière selon l'une des revendications précédentes, **caractérisé en ce que** les éléments en forme de panneaux se composent d'un matériau tel ou comportent du côté émettant la lumière une impression telle que du fait de l'absorption de la lumière, de la réflexion de la lumière et/ou de la diffusion de la lumière, la lumière injectée depuis l'un des côtés frontaux par le biais des premiers moyens d'éclairage ne laisse apparaître l'élément en forme de panneau en lumière blanche ou colorée que jusqu'à environ le centre du panneau.

8. Arrangement d'éléments en forme de panneaux émettant de la lumière selon l'une des revendications précédentes, **caractérisé en ce qu'**il est prévu un troisième nombre donné de moyens d'éclairage sous la forme de LED ou d'au moins un tube fluorescent, lesquels injectent de la lumière dans l'élément en forme de panneau depuis un troisième côté frontal, le sens d'injection étant transversal par rapport au sens d'injection des premiers et/ou deuxièmes moyens d'éclairage.

9. Arrangement d'éléments en forme de panneaux émettant de la lumière selon l'une des revendications précédentes, **caractérisé en ce que** les moyens d'éclairage peuvent être commandés de telle sorte que de la lumière blanche peut être injectée dans un élément en forme de panneau depuis au moins un côté frontal et de la lumière colorée peut être injectée dans l'élément en forme de panneau depuis au moins un deuxième côté frontal qui s'étend transversalement au premier côté frontal.

10. Arrangement d'éléments en forme de panneaux émettant de la lumière selon l'une des revendications précédentes, **caractérisé en ce que** des moyens d'éclairage sous la forme de LED et/ou de tubes fluorescents sont disposés sur les quatre côtés frontaux d'un élément en forme de panneau, lesquels peuvent à chaque fois être commandés et allumés ou éteints ou alors dont la luminosité peut être modifiée (variable) individuellement ou en groupes par le biais d'une commande.

11. Arrangement d'éléments en forme de panneaux émettant de la lumière selon l'une des revendications précédentes, **caractérisé en ce qu'**un nombre donné de LED de couleur de lumière rouge, verte et bleue est disposé sur un ou plusieurs côtés frontaux de l'élément en forme de panneau, lesquelles peuvent être commandées simultanément par le biais d'une commande de manière à injecter globalement de la lumière blanche dans l'élément en forme de panneau.
